# EUROPEAN PATENT SPECIFICATION

(11) **EP 0 423 778 B1**
(45) Date of publication and mention of the grant of the patent: **13.07.1994**
(21) Application number: 90119956.2
(22) Date of filing: 18.10.1990
(51) Int. Cl.: B60H 1/00

(54) **A distributor for motor-vehicle air-conditioning systems**
Luftverteiler für Klimaanlage von Kraftfahrzeugen
Distributeur d'air pour systèmes de climatisation de véhicules automobiles

(30) Priority: 20.10.1989 IT 6790689
(43) Date of publication of application: 24.04.1991
(73) Proprietor: BORLETTI CLIMATIZZAZIONE S.r.l., 10046 Poirino (Torino) (IT)
(72) Inventor: Aimone, Adelio, I-10044 Pianezza (Torino) (IT)
(74) Representative: Quinterno, Giuseppe

(56) References cited:
- EP-A- 0 296 555
- DE-A- 3 119 557
- FR-A- 1 359 909
- SU-A- 432 471
- US-A- 4 768 545

## Description

The present invention relates to a distributor, particularly for motor-vehicle, air-conditioning systems, of the kind defined in the preamble of Claim 1.

EP-A-0 296 555 discloses a distributor of this kind in which the obturator and the choking shutter are movable simultaneously in accordance with respective, different predetermined laws of motion by means of a common drive shaft and distinct, different trains of gears.

The object of the present invention is to provide a rotary distributor of the above-specified type which provides for a plurality of air-flow configurations without making the structure and the production of the distributor too complicated.

According to the invention, this object is achieved by means of a distributor having the features defined in Claim 1.

By virtue of these characteristics, in addition to the choking effect of the obturator, which may have one or more internal baffles, the air-flow is also regulated and divided between the various air vents of the motor vehicle by means of the choking shutter which is operated by the rotation of the obturator and thus needs no additional control.

Preferably, the distributor also includes an auxiliary shutter which is articulated to the housing structure in correspondence with an aperture for the passage of air about an axis parallel to the axis of rotation of the obturator and is urged into peripheral contact with the latter by resilient biasing means, the cylindrical obturator having shaped guide means on which the auxiliary shutter slides during the rotation of the obturator and which are adapted to enable the auxiliary shutter to pivot and to assume predetermined configurations for choking the air-flow corresponding to certain angular positions of the obturator. In maximum ventilation conditions, the auxiliary shutter pivots to enlarge the opening for the passage of the air and the flow of air can thus be increased.

Further advantages and characteristics of the distributor according to the invention will become clear from, the detailed description which follows, provided purely way of non-limiting) example, with reference to the appended drawings, in which:

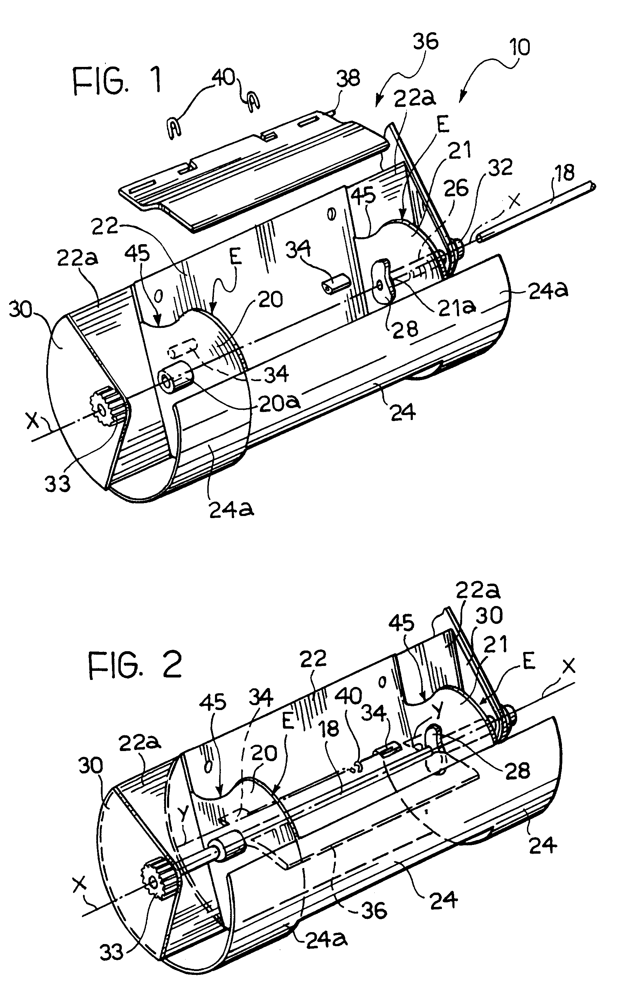

Figure 1 is an exploded perspective view of the obturator of a distributor according to the invention,
Figure 2 is a perspective view of the obturator of Figure 1 in the assemble configuration, and
Figures 3-7 are schematic cross-sections of a distributor according to the invention in five different configurations.

With reference to the drawings, a rotary cylindrical obturator, indicated 10, is adapted to be positioned in a cavity C in a housing structure A of a distributor. The housing structure A has a radial apertures 12, 16, 13, 14 and 15 for admitting air to the distributor, for supplying air to diffusers at the base of the windscreen, for connection to frontal vents directed towards the seats in the passenger compartment and, finally, for connection to lower vents adapted to direct the air-flow towards the floor of the motor vehicle, respectively. The housing structure A of the distributor may also include seats for a fan for directing the air to the apertures 12 and 16, for radiators for heating/cooling the air-flow, for auxiliary choking shutters, and for the mounting of other components of the air-conditioning system.

The cylindrical obturator 10 is mounted for rotation about an axis X-X on a shaft 18 supported by the housing structure A and has a pair of circular transverse baffles 20 and 21, a longitudinal baffle 22 which connects the transverse baffles 20, 21 and is parallel to the shaft 18, and a wall 24 with a cylindrical surface coaxial with the shaft 18 and located on the opposite side of the shaft from the longitudinal baffle 22. The longitudinal baffle 22 and the wall 24 with the cylindrical surface have respective ends 22a and 24a which extend beyond the transverse baffles 20 and 21. At their centres, the latter have a bush 20a and a hole 21a respectively, coaxial with the shaft 18. The whole 21a in the transverse baffle 21 is for the insertion of a tubular support element 26 which is keyed to the fixed shaft 18 and carries a can 28 at its end adjacent the transverse support 21. The ends 22a of the longitudinal baffle 22 are also connected by means of triangular walls 30 to respective auxiliary bushes 32 and 33 coaxial with the shaft 18. The auxiliary bush 33 has an outer surface in the form of a gear for rotating the obturator 10. Obviously, the latter may be rotated by other means.

Between the transverse baffles 20 and 21, the longitudinal baffle 22 has two articulation seats 34 in which a substantially rectangular choking shutter 36 with a lateral follower pin 38 for cooperating with the lateral surface of the cam 28 is articulated about an axis Y-Y parallel to the axis of rotation X-X of the obturator 10. Two pin springs 40 coaxial with the articulation seats 34 are interposed between the choking shutter 26 and the longitudinal baffle 22 for urging the shutter 36 into abutment with the longitudinal baffle 22.

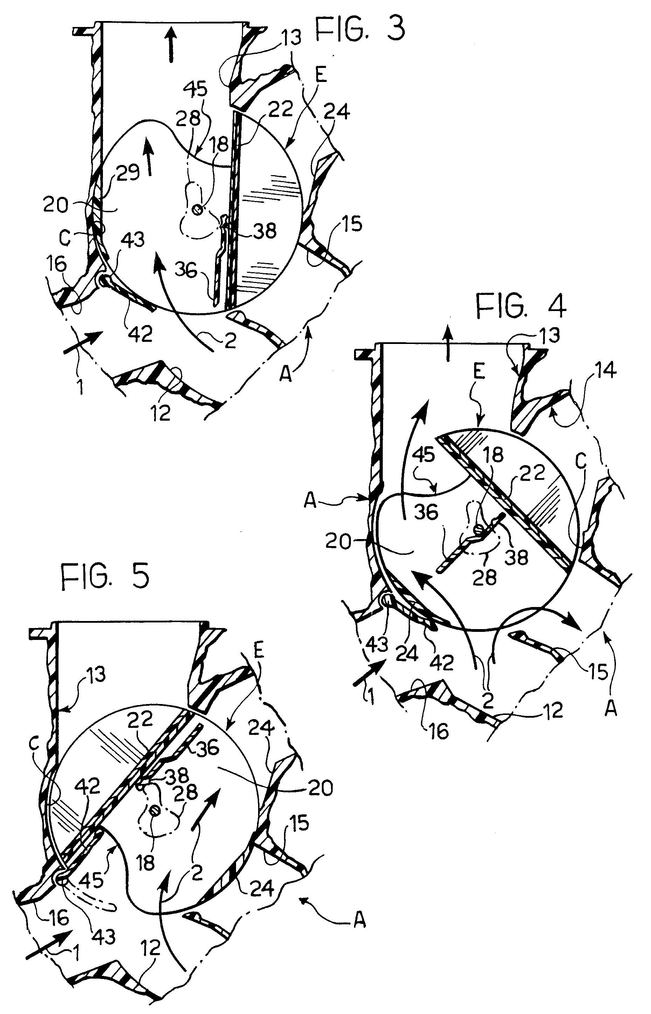

An auxiliary shutter 42 is provided in correspondence with the air-inlet aperture 12 of the distributor and is articulated to the housing structure A about an axis parallel to the axis of rotation X-X of the obturator 10. A spring 43 is interposed between the auxiliary shutter 42 and the housing structure A for urging the auxiliary shutter into contact with peripheral edges E of the circular transverse baffles 20, 21. Each transverse baffle has a recess 45 in its circular edge adjacent the longitudinal baffle 22 to enable the auxiliary shutter 42 to pivot when the obturator 10 assumes the configuration shown in Figure 5, as will become clear from the following description.

When the distributor is in the operative configuration, the obturator 10 can be rotated by the gear 33, in known manner, by means of a manual, electrical, or pneumatic device. Figure 3 shows a first configuration of the distributor, in which the longitudinal baffle 22 prevents the air-flow from being directed through the apertures 14 and 15 to the respective frontal and lower vents. In this configuration, the free edge of the auxiliary shutter 42 is in contact with the peripheral edges of the transverse baffles 20 so as to choke the cold air 1 flowing in through the aperture 16. The choking shutter 36 is kept in a position substantially parallel to the longitudinal baffle 22 by the cooperation between the follower pin 38 and the lateral surface of the cam 28 so that it does not interfere with the hot air-flow 2 and/or the cold air-flow 1 (in the case of a mixture) which is directed entirely towards the diffusers or vents at the base of the windscreen (the so-called defrosting configuration).

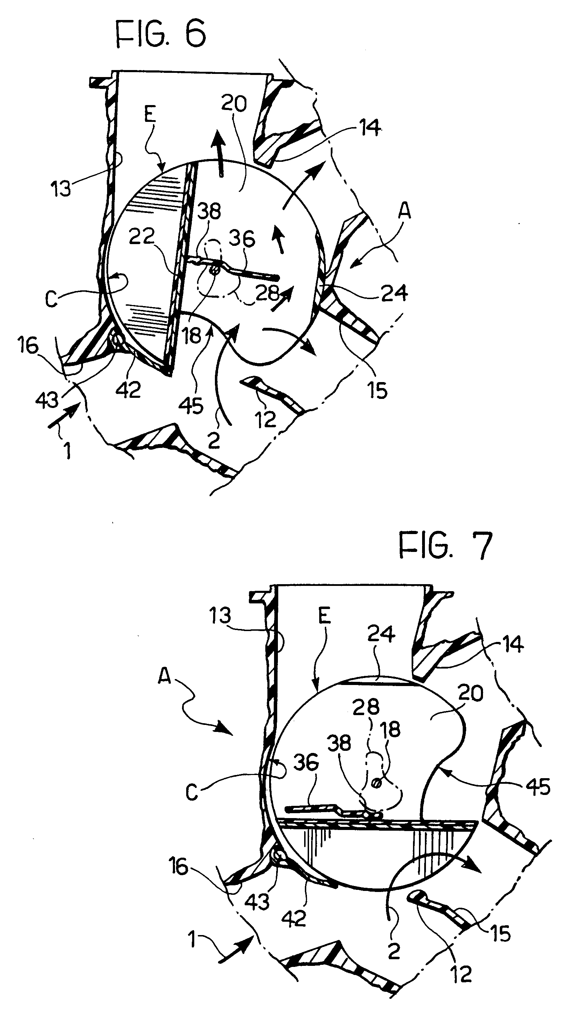

Figure 4 shows a second configuration of the distributor, which can be attained from the configuration of Figure 3 by an anticlockwise rotation of the obturator 10 (with reference to Figures 3 and 7) through approximately 45°. In this configuration, the longitudinal baffle 22 obstructs the hot air-flow 2 and/or the cold air-flow 1 to the aperture 14, directing it towards the lower vents and towards the diffusers at the base of the windscreen. In this configuration, the follower pin 38 of the choking shutter 36 is disengaged from the lateral surface of the cam 28 and is urged, under the action of the pin springs 40, against the central shaft 18 so that it is positioned substantially perpendicular to the longitudinal baffle 22. It thus divides the air-flow correctly between the apertures 13 and 15.

The configuration shown in Figure 5 is reached after a further anticlockwise rotation of the obturator 10 through an angle of approximately 90° and corresponds to the maximum cold air-flow 1 and/or hot air-flow 2 into the distributor since, in this configuration, the auxiliary shutter 42 can lie against the longitudinal baffle 22, by virtue of the presence of the shaped recesses 45, so as to enlarge the opening in correspondence with the aperture 16. This configuration may be selected in order to achieve a maximum flow of cold air. The flow of cold air 1 through the aperture 16 alone (in this case, the aperture 12 is obstructed by an auxiliary shutter, not shown) is directed to the central vents (aperture 14) and the side vents. The longitudinal baffle 22 completely obstructs the aperture 13, whilst the wall 24 with the cylindrical surface completely obstructs the aperture 15. The choking shutter 36 is also kept parallel to the longitudinal baffle 22 by virtue of the engagement between the follower pin 38 and the cam 28. Clearly, in this configuration, the maximum air-flow is conveyed to the frontal vents.

The fourth configuration shown in Figure 6 corresponds to the delivery of the hot air-flow 2 and/or the cold air-flow 1 to the frontal and lower vents. In this configuration, the longitudinal baffle 22 substantially chokes the air-flow to the aperture 13, whilst the choking shutter 36, which is urged against the central shaft 18 by the springs 40 and is therefore in a position sustantially perpendicular to the longitudinal baffle 22, achieves an optimal distribution of the air-flow to the apertures 14 and 15.

In the last configuration illustrated in Figure 7, which corresponds to the delivery of the entire hot air-flow 2 and/or cold air-flow 1 to the lower vents, the longitudinal baffle 22 obstructs the apertures 13 and 14.

Clearly, positions of the obturator 10 intermediate the five basic configurations described above afford the distributor a wide range of operating conditions. Moreover, with the distributor according to the invention, the side air vents can be supplied independently of the central vents.

## Claims

1. A distributor, particularly for motor-vehicle air-conditioning systems, comprising a housing structure (A) with apertures (12-16) for the passage of the air, a cylindrical obturator (10) which is rotatable in the housing structure (A) and is adapted to choke the flow of air through the apertures, and means for rotating the obturator (10), whereby a choking shutter (36) is articulated to the obturator (10) about an axis (Y-Y) characterised in that the axis (Y-Y) is substantially parallel to the axis of rotation (X-X) of the obturator (10) and has follower means (38) for cooperating with cam means (28) supported by the housing structure (A) in order to vary the angular position of the shutter (36) relative to the obturator (10) when the obturator (10) is rotated.

2. A distributor according to Claim 1, characterised in that it includes an auxiliary shutter (42) which is articulated to the housing structure (A) in correspondence with an aperture (12) for the passage of air about an axis parallel to the axis of rotation (X-X) of the obturator (10) and is urged into peripheral contact with the latter by resilient biasing means (43), the cylindrical obturator (10) having shaped guide means (20, 45) on which the auxiliary shutter (42) slides during the rotation of the obturator (10) and which are adapted to enable the auxiliary shutter (42) to pivot and to assume certain configurations for chocking the air-flow corresponding to certain angular positions of the obturator (10).

3. A distributor according to Claim 1, characterised in that the obturator (10) comprises:
- at least one pair of substantially circular transverse baffles (20, 21) coaxial with a central shaft (18) and rotatable about the latter,
- a flat longitudinal baffle (22) which connects the transverse baffles (20, 21) and is parallel to the central shaft (18),
- a wall (24) with a cylindrical surface on the opposite side of the central shaft (18) from the longitudinal baffle (22) and coaxial with the central shaft (18),
- a cam (28) supported by the structure (A) between the transverse baffles (20, 21),
- a substantially rectangular choking shutter (36) articulated to the longitudinal baffle (22) of the obturator (10) and having a lateral follower pin (38) for cooperating with the cant (28) when the obturator (10) is rotated, resilient means (40) being interposed between the longitudinal baffle (22) and the choking shutter (36) for leaping the follower pin (38) in contact with the cam (28).

4. A distributor according to Claims 2 and 3, characterised in that the guide means for the auxiliary shutter (42) are constituted by edges (E) of the transverse baffles (20, 21) , the latter having shaped recesses (45) for enabling the auxiliary shutter (42) to pivot inwardly of the obturator (10) when the obturator (10) is in a predetermined range of angular positions relative to the housing structure (A).

5. A distributor according to Claim 4, in which the housing structure (A) has at least four radial apertures (12, 13, 14, 15) which communicate respectively with an opening for admitting air to the distributor, with diffusers for diffusing air into the region at the base of the windscreen, with frontal air vents, and with lower air vents which are directed substantially towards the floor of the motor vehicle, characterised in that, as the cylindrical obturator (10) rotates about its axis (X-X), it can assume:
- a first configuration in which the longitudinal baffle (22) obstructs the flow of air through the frontal and lower vents and directs it entirely towards the diffusers at the base of the windscreen, the choking shutter (36) being positioned substantially parallel to and in contact with the longitudinal baffle (22) in this configuration,
- a second configuration in which the longitudinal baffle substantially obstructs the flow of air to the frontal vents and directs it towards the lower vents and the diffusers at the base of the windscreen, the choking shutter (36) being positioned substantially perpendicular to the longitudinal baffle (22) in this configuration so as to divide the two air-flows,
- a third configuration in which the longitudinal baffle (22) obstructs the flow of air to the diffusers at the base of the windscreen and in which the wall (24) with the cylindrical surface obstructs the flow of air to the lower vents, the choking shutter (36) being positioned substantially parallel to and in contact with the longitudinal baffle (22) in this configuration, and the auxiliary shutter (42), which is disposed in correspondence with the aperture (16) for admitting air to the distributor, being positioned substantially parallel to and in contact with the longitudinal baffle (22), by virtue of the presence of shaped recesses (45) in the transverse baffles (20, 21), in order to convey a greater flow of air to the front vents,
- a fourth configuration in which the longitudinal baffle (22) partially obstructs the flow of air to the diffusers at the base of the windscreen and directs it towards the front and lower vents, the choking shutter (36) being poisitioned substantially perpendicular to the longitudinal baffle (22) in this configuration so as to divide the two air-flows, and
- a fifth configuration in which the longitudinal baffle (22) obstructs the flow of air to the diffusers at the base of the windscreen and to the frontal vents and directs it entirely to the lower vents.

## Patentansprüche

1. Verteiler, insbesondere für Kraftfahrzeugklimaanlagen, umfassend einen Gehäuseaufbau (A) mit Öffnungen (12-16) für den Durchgang der Luft, ein in dem Gehäuseaufbau (A) drehbares, zylindrisches Absperrorgan (10), welches dazu ausgebildet ist, das Strömen von Luft durch die Öffnungen zu drosseln, und Mittel zum Drehen des Absperrorgans (10), wodurch eine Drosselklappe (36) an dem Absperrorgan (10) um eine Achse (Y-Y) angelenkt ist, dadurch gekennzeichnet, daß die Achse (Y-Y) im wesentlichen parellel zur Drehachse (X-X) des Absperrorgans (10) ist und ferner Folgermittel (38) zur Zusammenwirkung mit Nokkenmitteln (28) aufweist, welche von dem Gehäuseaufbau (A) getragen sind, um die Winkelstellung der Klappe (36) relativ zu dem Absperrorgan (10) zu variieren, wenn das Absperrorgan (10) gedreht wird.

2. Verteiler nach Anspruch 1, dadurch gekennzeichnet, daß er eine Zusatzklappe (42) aufweist, welche einer Öffnung (12) für den Durchgang von Luft zugeordnet an dem Gehäuseaufbau (A) um eine zu der Drehachse (X-X) des Absperrorgans parallele Achse angelenkt ist und durch elastische Vorspannmittel (43) in Umfangskontakt mit dem letzteren gedrängt ist, wobei das zylindrische Absperrorgan (10) geformte Führungsmittel (20, 45) aufweist, auf welchen sich die Zusatzklappe (42) während der Drehung des Absperrorgans (10) verschiebt und welche dazu ausgebildet sind, es der Zusatzklappe (42) zu ermöglichen, zu verschwenken und bestimmte Zustände zum Drosseln der Luftströmung entsprechend bestimmter Winkelstellungen des Absperrorgans (10) einzunehmen.

3. Verteiler nach Anspruch 1, dadurch gekennzeichnet, daß das Absperrorgan (10) umfaßt:
wenigstens ein Paar von im wesentlichen kreisförmigen Transversalablenkplatten (20, 21), welche koaxial zu einer zentralen Welle (18) und um die letztere drehbar sind,
eine flache Longitudinalablenkplatte (22), welche die Transversalablenkplatten (20, 21) miteinander verbindet und parallel zur zentralen Welle (18) ist,
eine Wandung (24), welche eine zylindrische Oberfläche an der von der Longitudinalablenkplatte (22) entgegengesetzten Seite der zentralen Welle (18) aufweist und koaxial zur zentralen Welle (18) ist,
einen von dem Aufbau (A) zwischen den Transversalablenkplatten (20, 21) getragenen Nocken (28),
eine an der Longitudinalablenkplatte (22) des Absperrorgans (10) angelenkte, im wesentlichen rechtwinklige Drosselklappe (36) mit einem seitlichen Folgerstift (38) zur Zusammenwirkung mit dem Nocken (28), wenn das Absperrorgan (10) gedreht wird, wobei elastische Mittel (40) zwischen der Longitudinalablenkplatte (22) und der Drosselklappe (36) angeordnet sind, um den Folgerstift (38) in Kontakt mit dem Nocken (28) zu halten.

4. Verteiler nach den Ansprüchen 2 und 3, dadurch gekennzeichnet, daß die Führungsmittel für die Zusatzklappe (42) von Rändern (E) der Transversalablenkplatten (20, 21) gebildet sind, wobei die letzteren geformte Ausnehmungen (45) aufweisen, um es der Zusatzklappe (42) zu ermöglichen, in das Absperrorgan (10) zu verschwenken, wenn sich das Absperrorgan (10) relativ zu dem Gehäuseaufbau (A) in einem vorbestimmten Bereich von Winkelstellungen befindet.

5. Verteiler nach Anspruch 4, bei welchem der Gehäuseaufbau (A) wenigstens vier Radialöffnungen (12, 13, 14, 15) aufweist, welche jeweils mit einer Öffnung für den Luftzutritt zu dem Verteiler, mit Diffusoren zum Verbreiten von Luft in den Bereich an der Basis der Windschutzscheibe, mit vorderen Lüftungsöffnungen und mit unteren, im wesentlichen zum Boden des Kraftfahrzeugs hin gerichteten Lüftungsöffnungen in Verbindung stehen, dadurch gekennzeichnet, daß das zylindrische Absperrorgan (10) bei seiner Drehung um seine Achse (X-X) einnehmen kann:
einen ersten Zustand, in welchem die Longitudinalablenkplatte (22) die Luftströmung durch die vorderen und unteren Lüftungsöffnungen blockiert und sie völlig auf die Diffusoren an der Basis der Windschutzscheibe lenkt, wobei die Drosselklappe (36) in diesem Zustand im wesentlichen parallel zur Longitudinalablenkplatte (22) und in Kontakt mit dieser angeordnet ist,
einen zweiten Zustand, in welchem die Longitudinalablenkplatte die Luftströmung zu den vorderen Lüftungsöffnungen im wesentlichen blockiert und sie auf die unteren Lüftungsöffnungen und die Diffusoren an der Basis der Windschutzscheibe lenkt, wobei die Drosselklappe (36) in diesem Zustand im wesentlichen orthogonal zu der Longitudinalablenkplatte (22) angeordnet ist, um die beiden Luftströmungen aufzuteilen,
einen dritten Zustand, in welchem die Longitudinalablenkplatte (22) die Luftströmung zu den Diffusoren an der Basis der Windschutzscheibe blockiert und in welchem die Wandung (24) mit der zylindrischen Oberfläche die Luftströmung zu den unteren Lüftungsöffnungen blockiert, wobei die Drosselklappe (36) in diesem Zustand im wesentlichen parallel zu und in Kontakt mit der Longitudinalablenkplatte (22) angeordnet ist und wobei die den Öffnungen (16) für den Luftzugang zu dem Verteiler zugeordnet angeordnete Zusatzklappe (42) aufgrund der Anwesenheit der geformten Ausnehmungen (45) in den Transversalablenkplatten (20, 21) im wesentlichen parallel zu und in Kontakt mit der Longitudinalablenkplatte (22) angeordnet ist, um eine größere Luftströmung zu den vorderen Lüftungsöffnungen zu befördern,
einen vierten Zustand, in welchem die Longitudinalablenkplatte (22) die Luftströmung zu den Diffusoren an der Basis der Windschutzscheibe teilweise blockiert und sie auf die vorderen und unteren Lüftungsöffnungen lenkt, wobei die Drosselklappe (36) in diesem Zustand im wesentlichen orthogonal zu der Longitudinalablenkplatte (22) angeordnet ist, um die beiden Luftströmungen aufzuteilen, und
einen fünften Zustand, in welchem die Longitudinalablenkplatte (22) die Luftströmung zu den Diffusoren an der Basis der Windschutzscheibe und zu den vorderen Lüftungsöffnungen blockiert und sie völlig zu den unteren Lüftungsöffnungen lenkt.

## Revendications

1. Distributeur, en particulier pour systèmes de conditionnement d'air de véhicule automobile, comportant une structure formant logement (A) avec des ouvertures (12-16) pour le passage de l'air, un obturateur cylindrique (10) qui peut être entraîné en rotation dans la structure formant logement (A) et qui est conçu pour réduire le débit d'air passant par les ouvertures, ainsi que des moyens pour entraîner en rotation l'obturateur (10), un registre de réduction (36) étant articulé à l'obturateur (10) autour d'un axe (Y-Y); distributeur caractérisé par le fait que l'axe (Y-Y) est essentiellement parallèle à l'axe de rotation (X-X) de l'obturateur (10) et présente un moyen formant palpeur (38) pour coopérer avec un moyen formant came (28) supporté par la structure formant logement (A) pour faire varier la position angulaire du registre (36) par rapport à l'obturateur (10) lorsque l'on fait tourner l'obturateur (10).

2. Distributeur selon la revendication 1, caractérisé par le fait qu'il comporte un registre auxiliaire (42) qui est articulé à la structure formant logement (A), en correspondance avec une ouverture (12) pour le passage de l'air, autour d'un axe parallèle à l'axe de rotation (X-X) de l'obturateur (10) et qui est contraint à venir en contact périphérique avec ce dernier par un moyen élastique de contrainte (43), l'obturateur cylindrique (10) présentant des moyens de guidage en forme (20, 45) sur lesquels le registre auxiliaire (42) glisse au cours de la rotation de l'obturateur (10) et qui sont conçus pour permettre au registre auxiliaire (42) de pivoter et de prendre certaines configurations pour réduire le flux d'air correspondant à certaines positions angulaires de l'obturateur (10).

3. Distributeur selon la revendication 1, caractérisé par le fait que l'obturateur (10) comporte:
- au moins une paire d'écrans transversaux (20, 21), sensiblement circulaires, coaxiaux à l'arbre central (18) et pouvant tourner autour de ce dernier,
- un écran longitudinal plat (22) qui relie les écrans transversaux (20,21) et qui est parallèle à l'arbre central (18),
- une paroie (24) à surface cylindrique, du côté opposé à l'écran longitudinal (22) par rapport à l'arbre central (18) et coaxial à l'arbre central (18),
- une came (28) qui est supportée par la structure (A) entre les écrans transversaux (20,21),
- un registre de réduction (36), sensiblement rectangulaire, articulé sur l'écran longitudinal (22) de l'obturateur (10) et présentant une tige palpeuse latérale (38) pour coopérer avec la came (28) lorsque l'on fait tourner l'obturateur (10), des moyens élastiques (40) étant interposés entre l'écran longitudinal (22) et le registre de réduction (36) pour maintenir la tige palpeuse (38) en contact avec la came (28).

4. Distributeur selon les revendications 2 et 3, caractérisé par le fait que les moyens de guidage pour le registre auxiliaire (42) sont constitués par les bords (E) des écrans transversaux (20, 21), ces derniers présentant des découpes de forme (45) pour permettre au registre auxiliaire (42) de pivoter vers l'intérieur de l'obturateur (10) lorsque l'obturateur (10) se trouve sur une plage prédéterminée de positions angulaires par rapport à la structure formant logement (A).

5. Distributeur selon la revendication 4, dans lequel la structure formant logement (A) comporte au moins quatre ouvertures radiales (12, 13, 14, 15) qui communiquent respectivement, avec une ouverture d'admission de l'air dans le distributeur, avec des diffuseurs pour diffuser l'air dans la région située à la base du pare-brise, avec des sorties d'air frontales et avec des sorties d'air inférieures qui sont sensiblement orientées en direction du plancher du véhicule automobile, distributeur caractérisé par le fait que, au fur et à mesure que l'obturateur cylindrique (10) tourne autour de son axe (X-X), il peut prendre:
- une première configuration dans laquelle l'écran longitudinal (22) fait obstacle au flux d'air à travers les sorties frontales et inférieures et l'oriente entièrement en direction des diffuseurs situés à la base du pare-brise, le registre de réduction (36) étant, dans cette configuration, positionné sensiblement parallèlement à l'écran longitudinal (22) et en contact avec cet écran,
- une seconde configuration dans laquelle l'écran longitudinal fait sensiblement obstacle au flux d'air en direction des sorties frontales et l'oriente en direction des sorties inférieures et des diffuseurs situés à la base du pare-brise, le registre de réduction (36) étant, dans cette configuration, positionné sensiblement perpendiculairement à l'écran longitudinal (22) de façon à diviser en les deux flux d'air,
- une troisième configuration dans laquelle l'écran longitudinal (22) fait obstacle au flux d'air en direction des diffuseurs situés à la base du pare-brise et dans laquelle la paroi (24) à surface cylindrique fait obstacle au flux d'air en direction des sorties inférieures, le registre de réduction (36) étant, dans cette configuration, positionné sensiblement parallèlement à l'écran longitudinal (22) et en contact avec lui, et le registre auxiliaire (42), est disposé en correspondance avec l'ouverture (16) d'admission d'air dans le distributeur, étant positionné sensiblement parallèlement à l'écran longitudinal (22), et en contact avec cet écran, du fait de la présence des découpes de forme (45) dans les écrans transversaux (20,21), de façon à envoyer un plus grand flux d'air en direction des sorties frontales,
- une quatrième configuration dans laquelle l'écran longitudinal (22) fait partiellement obstacle au flux d'air en direction des diffuseurs situés à la base du pare-brise et l'envoie en direction des sorties frontales et inférieures, le registre de réduction (36) étant, dans cette configuration, positionné sensiblement perpendiculairement à l'écran longitudinal (22) de façon à diviser en les deux flux d'air,
- une cinquième configuration dans laquelle l'écran longitudinal (22) fait obstacle au flux d'air en direction des diffuseurs situés à la base du pare-brise et en direction des sorties frontales et l'envoie entièrement en direction des sorties inférieures.
